# EUROPEAN PATENT APPLICATION

(11) **EP 4 546 183 A1**
(43) Date of publication of application: **30.04.2025**
(21) Application number: 23826840.3
(22) Date of filing: 16.05.2023
(51) Int. Cl.: G06F 21/44, G06F 21/12, G06F 21/56

(54) **INFORMATION PROCESSING DEVICE, DOMAIN CONFIRMING METHOD, AND DOMAIN CONFIRMING PROGRAM**

(30) Priority: 22.06.2022 JP 2022100608
(71) Applicant: Caulis Inc., Tokyo 100-0004 (JP)
(72) Inventor: SHIMAZU Atsuyoshi, Tokyo 100-0004 (JP)
(74) Representative: Algemeen Octrooi- en Merkenbureau B.V.
(86) International application number: PCT/JP2023/018350
(87) International publication number: WO 2023/248652

(57) **Abstract**

[Problem] To provide an information processing device that can reduce the possibility of a newly established domain becoming a loss to an existing domain.

[Means to Solve the Problem] An information processing device comprises: an acquisition unit that acquires a first domain name indicating a newly registered domain name; a check unit that checks whether a web page corresponding to the first domain name exists; a detection unit that detects whether the first domain name has a second domain name that is likely to be misidentified as being the same as one of the existing domain names; and a notification unit that notifies a user associated with the second domain name of information on the first domain name when the detection unit detects the second domain name and there is a web page corresponding to the first domain name that is likely to be misidentified as the second domain name.

## Description

### [Technical Field]

The present invention relates to an information processing device, a domain check method, and a domain check program.

### [Background Art]

Illegal activities such as various types of fraud have been on the rise in recent years, including creation of domains that look similar to existing domains and using those domains to lead users to web pages that are misleading in that they are web pages related to existing domains. These activities can be a major loss, for vendors who use existing domains to provide some kind of service, which can lead to lost opportunities to acquire new customers and an exodus of existing customers.

Therefore, Patent Document 1 discloses a device and program for detecting phishing sites.

### [Prior Art Document]

### [Patent Document]

[Patent Document 1] Japanese Unexamined Patent Application Publication No. 2022-7278

### SUMMARY OF THE INVENTION

### [Problem to be solved by the Invention]

Regarding the above, there is a desire for users of existing domains to prevent the above situation as much as possible.

The object of the present invention, therefore, is to provide an information processing device, a domain check method, and a domain check program that can reduce a possibility that a newly established domain results in the loss of an existing domain.

### [Means for solving the Problem]

The information processing device according to one embodiment of the present invention comprises: an acquisition unit that acquires a first domain name indicating a newly registered domain name; a check unit that checks whether a web page corresponding to the first domain name exists; a detection unit that detects whether the first domain name has a second domain name that is likely to be misidentified as being the same as one of existing domain names; and a notification unit that notifies a user associated with the second domain name of information on the first domain name when the detection unit detects the second domain name and there is a web page corresponding to the first domain name that is likely to be misidentified as the second domain name.

In the above information processing device, the detection unit may detect a domain name that is the same as the first domain name when one character is added to the existing domain name as the second domain name.

In the above information processing device, the detection unit may detect a domain name that is the same as the first domain name when one character is deleted from the existing domain name as the second domain name.

In the above information processing device, the detection unit may detect a domain name that is the same as the first domain name when one character is deleted from the existing domain name as the second domain name.

In the above information processing device, the detection unit may detect as the second domain name a domain name that is the same as the first domain name when a portion of the existing domain name is replaced by another string that is similar to the portion of the string.

The above information processing device may comprise: a receiving unit that receives check information from the user indicating whether the first domain name is likely to be a malicious domain name for the user; and a registration unit that registers success/failure information indicating success or failure of detection by the detection unit based on the check information.

The above information processing device may comprise: a receiving unit that receives phishing information from the user indicating whether the web page corresponding to the first domain name is a phishing site; and a registration unit that registers the first domain name as a phishing site on a black list when the phishing information indicates that the web page corresponding to the first domain name is a phishing site.

In addition, the domain check method according to one embodiment of the invention comprises the steps of: acquiring a first domain name indicating a newly registered domain name; checking whether a web page corresponding to the first domain name exists; detecting whether the first domain name has a second domain name that is likely to be misidentified as the same as one of existing domain names; and notifying a user associated with the second domain name of information on the first domain name when the second domain name is detected in the detecting, and when there is a web page corresponding to the first domain name that is likely to be misidentified as the second domain name.

The domain check program according to one embodiment of the present invention causes a computer to execute functions of: acquiring a first domain name indicating a newly registered domain name; checking whether a web page corresponding to the first domain name exists; detecting whether the first domain name has a second domain name that is likely to be misidentified as the same as one of existing domain names; and notifying a user associated with the second domain name of information on the first domain name when the second domain name is detected in the detecting, and when there is a web page corresponding to the first domain name that is likely to be misidentified as the second domain name.

### [Advantageous Effects]

According to the information processing device, domain check method, and domain check program pertaining to the present disclosure, it is possible to determine whether a telephone number from a customer is being used illegally, and to output and present the results of the determination.

### BRIEF DESCRIPTION OF THE DRAWINGS

FIG. 1 is a system diagram showing an example of configuration of a domain check system including information processing device.
FIG. 2 is a block diagram showing an example of configuration of a server (information processing device).
FIG. 3 is a block diagram showing an example of configuration of a terminal.
FIG. 4 is a block diagram showing an example of configuration of a domain server.
FIG. 5 is a conceptual data diagram showing an example of configuration of domain information.
FIG. 6 is a sequence diagram showing an example of interactions between devices related to the domain check system.
FIG. 7 is a flowchart showing an example of operation of an information processing device.
FIG. 8 is a flowchart showing an example of operation of the terminal.

### EMBODYMENT FOR CARRYING OUT THE INVENTION

The information processing device, domain check method, and domain check program according to the present invention will be described in detail below, with reference to the drawings.

### [Emdodiment]

### [Summary]

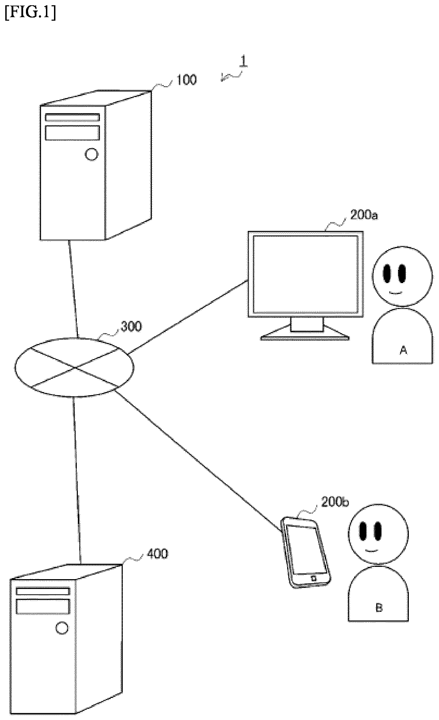

FIG. 1 is an example of a system diagram showing a device for the domain check system 1. As shown in FIG. 1, the domain check system 1 includes a server (information processing device) 100, terminals 200 (200a, 200b), and a domain server 400, which are communicatively connected via network 300.

In the domain check system 1, when a new domain is registered on the domain server 400, the server (information processing device) 100 acquires information on the new domain, determines whether the new domain is likely to be misidentified as an existing domain, and if the new domain is likely to be misidentified, the server (information processing device) 100 transmits information on the new domain to a user corresponding to the existing domain.

The server (information processing device) 100 determines whether a newly acquired (registered) domain is likely to be misidentified as an existing domain, and if so, notifies users of the existing domain of information on the new domain that is likely to be misidentified. More specifically, if the server 100 determines that a new domain is likely to be misidentified as an existing domain, the server 100 checks whether a web page is associated with the new domain, and if so, the server 100 transmits information on the new domain to the user associated with the existing domain, and if so, the server 100 transmits the information on the new domain to the user associated with the existing domain.

The terminal 200 is an information processing device held by the user associated with the existing domain. The terminal 200 receives information on the new domain from the server (information processing device) 100 and presents the information to the user of the terminal 200. This allows the user of the terminal 200 to check whether the newly registered domain is misidentified as the user's own domain, thereby enhancing a possibility of preventing losses that the user may suffer.

The domain server 400 is a server device that provides information on newly registered domains. The domain server 400 provides information on newly registered domains upon request from the server (information processing device) 100. The domain server 400 may be a server that only stores information on domains to be registered. That is, the domain server 400 is not essentially required to accept domain registrations, but may only receive and store information on new domains from servers that register domains.

With this configuration, the domain check system 1 notifies users holding existing domains of information on domains that are likely to be misidentified as newly registered existing domains, thereby preventing users holding existing domains from losing money based on newly registered new domains.

The network 300 includes wireless networks and wired networks. Specifically, for example, the network 300 includes wireless LANs (WLANs), wide area networks (WANs), integrated service digital networks (ISDNs), wireless LANs, code division multiple access code division multiple access (CDMA), long term evolution (LTE), LTE-Advanced, fourth generation (4G), fifth generation (5G), and sixth generation (6G) and later mobile communication systems, and so on. The network 300 is not limited to these examples and may include, for example, Public Switched Telephone Network (PSTN), Bluetooth (registered trademark), optical fiber, ADSL (Asymmetric Digital Subscriber LINE) lines, satellite communication networks, for example, Network 300 may also be a combination of these.

The following is a detailed description.

### [Configuration]

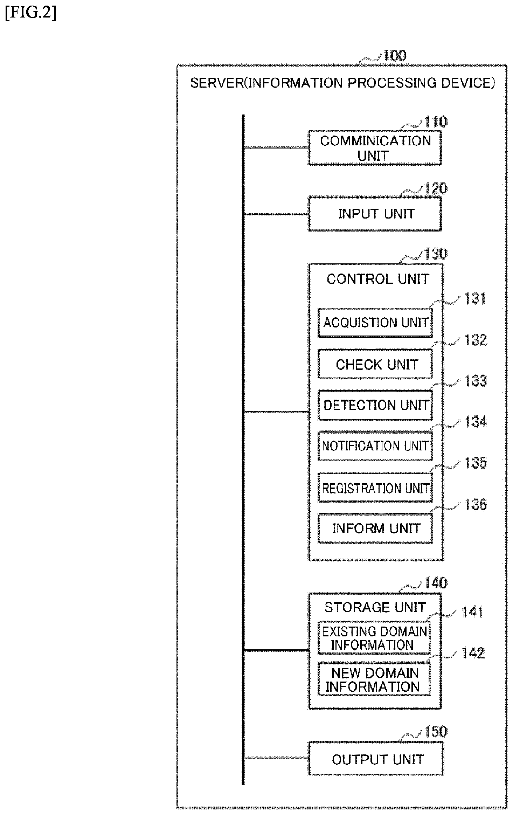

FIG. 2 is a block diagram showing an example of configuration of a server (information processing device) 100 (hereinafter referred to as information processing device 100). The information processing device 100 is a computer system equipped with a processor and memory, and may be implemented by a server device, a PC, a tablet terminal, for example.

As shown in FIG. 2, the information processing device 100 has a communication unit 110, an input unit 120, a control unit 130, a storage unit 140, and an output unit 150.

The communication unit 110 is a communication interface for communicating with external devices via the network 300 according to instructions from the control unit 130. The communication unit 110, for example, receives a new domain list transmitted from the domain server 400 and transmits the new domain list to the control unit 130. The communication unit 110 also transmits, for example, new registration information indicating that a new domain that is likely to be misidentified as an existing domain has been registered to the user's terminal 200 corresponding to the existing domain, in accordance with instructions from the control unit 130.

The input unit 120 is an input interface that accepts input from an operator or other user of the information processing device 100. The input unit 120 may be implemented by input devices such as a keyboard and a mouse, for example, or by a microphone that accepts voice input. The input unit 120 transmits the input by the operator to the control unit 130.

The control unit 130 is a processor that has a function of controlling each part of the information processing device 100. The control unit 130 executes various programs stored in the storage unit 140 and references data stored in the storage unit 140 to execute the functions to be executed as the information processing device 100.

The control unit 130 may function as an acquisition unit 131, a check unit 132, a detection unit 133, a notification unit 134, and may function as a registration unit 135 and an inform unit 136.

The acquisition unit 131 acquires the new domain list including newly registered domains from the domain server 400 via the communication unit 110. The acquisition unit 131 acquires the new domain list at a predetermined timing. The predetermined timing may be any timing as long as the acquisition unit 131 can acquire information on new domains on a regular basis. For example, the acquisition unit 131 may be configured to acquire the information at 10:00 a.m. daily or every Monday. The acquisition unit 131 stores the information in the storage unit 140 as a new domain list and new domain information 142.

For each new domain included in the new domain information 142, the check unit 132 checks whether a corresponding web page exists. As an example, when a domain name is entered, the domain name may be checked by using a service that provides information on whether a web server or mail server is set up for the domain, or by executing a program that searches for the existence of a corresponding web server by entering the domain name.

The detection unit 133 detects, for each new domain for which the check unit 132 was able to check the existence of the corresponding web page, whether there is a domain that is likely to be misidentified as the same as any of the existing domains included in the existing domain information 141. That is, the system determines whether there is a possibility that the new domain name with which the web page is associated is misidentified as the same as the existing domain name in terms of its appearance. Misidentification as visually identical means, for example, the following cases.

(i) The new domain name is the same as the existing domain name when one or more characters are added to the new domain name. Conversely, the new domain name has some characters deleted from the existing domain name. The portion of characters may be a single character or, if there is a possibility of misidentification, it may be multiple characters. As an example, the detection unit 133 determines that a new domain such as "carlis" or "caruls" is likely to be misidentified when the existing domain is "carulis". That is, the detection unit 133 may determine that a new domain name is misidentified when a string with some characters deleted from the existing domain name matches the new domain name. Some of the characters may be a single character as described above, or if there are multiple characters, they may be a predetermined percentage (e.g., 5%) of the number of characters in the string of the existing domain name.
(ii) If one or more characters are deleted from the new domain name, the new domain name becomes the same as the existing domain name. Conversely, the new domain name is the existing domain name with one or more characters added. In particular, it may be the case that the new domain name is a string of characters duplicating one character of the existing domain name. As an example, the detection unit 133 determines that a new domain name such as "caarulis" or "caulliis" is likely to be misidentified when the existing domain name is "carulis". That is, the detection unit 133 may determine that a new domain name is misidentified when a string of characters in the new domain name, with some characters deleted, matches the existing domain name. Some characters may be a single character as described above, or may be a predetermined percentage (e.g., 10%) of the number of characters in the sequence of characters in the new domain name (or existing domain name).
(iii) Adding a given string before or after an existing domain name makes the existing domain name the same as the new domain name and string. Conversely, deleting a given string that exists before or after the new domain name makes the new domain name the same as the existing domain name. Note that the predetermined character string may exist both before and after the existing domain name, in which case the character string may be the same or different before and after the existing domain name. As an example, the detection unit 133 determines that a new domain such as "neocarulis" or "carulislis" is likely to be misidentified when the existing domain is "carulis". That is, the detection unit 133 may determine that a new domain name is a domain name that is misidentified as an existing domain name if the new domain name includes the same character string as the existing domain name.
(iv) A new domain name that becomes the same as an existing domain name when some characters of the existing domain name are substituted for others. Conversely, a new domain name that becomes the same as an existing domain name when some characters of the new domain name are replaced with another character is determined to be likely to be misidentified as an existing domain. A portion of the characters may be a single character or multiple characters. As an example, if the existing domain is "carulis", new domains such as "c@rulis", "carulls", or "c@rulls" are determined to be likely to be misidentified. The characters to be replaced can be determined by storing a correspondence table indicating characters that are likely to be misidentified in advance in the storage unit 140, and determining whether the character strings match when the conversions shown in the correspondence table are performed. For example, a group of combinations such as "a" and "@", "b" and "d", "p" and "q", "I" and "l", "I" and "l", for example, can be stored in the storage unit 140 as a correspondence table of easily misidentified replacement character combinations.
(v) The third-level domain is the same for the existing domain and the new domain, and the combination of the top-level domain and the second-level domain is different.

The detection unit 133 detects existing domains that are in the relationship shown in (i) through (iv) above. That is, the detection unit 133 identifies new domains that may cause losses to existing domains in some form (e.g., taking away existing customers, acquiring customers who are originally new customers of the existing domain, for example). Although an example in which the detection unit 133 performs rule-based detection as described above is described here, the detection unit 133 may also perform detection using a learning model. That is, the newly registered domain is the first domain and the existing domain is the second domain, and for each pair of domains, the corresponding information indicating whether the first domain name is likely to be misidentified as the second domain name is used as teaching data, and a learning model is generated by learning such teaching data multiple times. The learning model may be used to detect whether a new domain is likely to be misidentified as an existing domain. The learning model may also be created using the pairwise information of the new domain and the existing domain that the new domain is likely to be misidentified as teaching data.

The notification unit 134 notifies information on the registered new domain of the user's terminal 200 corresponding to the existing domain that has been detected by the detection unit that a new domain is likely to be misidentified as an existing domain via the communication unit 110. The information on the new domain may include at least the registered new domain name and may include the URL of the web page described in the new domain and a request message requesting check since the new domain is similar to the user's domain and may cause some loss. Since the new domain detected by the detection unit 133 is not necessarily a domain that may cause loss to the existing domain, the notification unit 134 sends information on the new domain to the terminal 200 of the user of the existing domain, in the sense of urging the user of the existing domain to check.

The registration unit 135 registers, via the communication unit 110, success/failure information indicating success or failure with respect to the detection result by the detection unit 133, based on check information indicating whether the new domain is a malicious domain for a user of an existing domain, in the storage unit 140. That is, the registration unit 135 registers success/failure information indicating whether the detection of a new domain detected by the information processing device 100 was correct or not for a domain that is likely to be misidentified as an existing domain in the storage unit 140. By accumulating this success/failure information, feedback can be provided to the detection unit 133 using this success/failure information to improve the accuracy of detection by the detection unit 133. As an example, in the case of rule-based detection, new rules for detection may be discovered and added, or in the case of detection using a learning model, the learning model may be updated by relearning the new domain used for detection, the existing domain, and its success/failure information, using new teaching data.

If the check information received from the user of the existing domain indicates that the new domain is a malicious domain, the registration unit 135 may register the information indicating that the web page corresponding to the new domain is a phishing site as a black list on phishing sites in the information indicating that the web page corresponding to the new domain is a phishing site may be registered in the storage unit 140 as a black list concerning phishing sites.

The inform unit 136 may inform that the new domain and the corresponding web page are phishing sites. Since notification of the information by the inform unit 136 is to prevent each user from being victimized, the destination of the notification may be any destination, the notification may be performed in the form of a message delivery to each user's terminal, a posting on a news site, or a notification to users who have entered into some contract with the information processing device, or the notification may be performed in the form of a notification to users who have entered into some kind of contract with the information processing device 100. The destination of the notification may be set each time by the operator of the information processing device 100 via the input unit 120, or the destination may be set in advance.

The storage unit 140 is a storage medium that stores various programs and data required by the information processing device 100 for operation. The storage unit 140 can be implemented by, for example, but not limited to, Hard Disc Drive (HDD), Solid State Drive (SSD), flash memory, and the like. The storage unit 140 may store a program for determining whether a new domain is misidentified as one of the existing domains, a program for checking whether a web page is associated with the new domain, a program for notifying that the new domain is likely to be misidentified as an existing domain, for example. These programs may be stored in any unit of the programmer's choice. These programs may be divided or integrated in any unit of the programmer. The storage unit 140 also stores the new domain information 142 and the existing domain information 141.

The output unit 150 outputs the specified information according to instructions from the control unit 130. The output of information by the output unit 150 may be output in the form of images or text, or in the form of sound, or in the form of transmission of information from an external device. The output unit 150 may be implemented by a monitor or speaker connected to the information processing device 100, as an example, and the transmission of information is performed via the communication unit 110.

The above is a description of the information processing device 100.

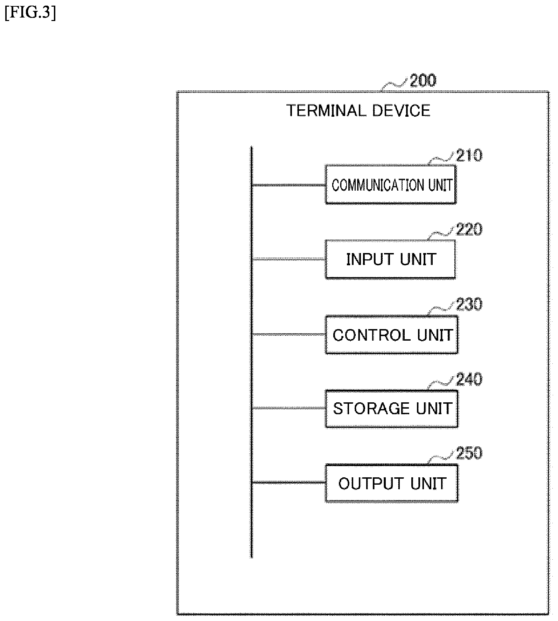

FIG. 3 is a block diagram showing an example of configuration of the terminal 200. The terminal 200 is an information processing terminal held by a user associated with an existing domain, and is a computer system equipped with a processor and memory. The terminal 200 can be implemented by, for example, but not limited to, a server device, a PC, a tablet terminal, a smartphone, or a cell phone.

As shown in FIG. 3, the terminal 200 has a communication unit 210, an input unit 220, a control unit 230, a storage unit 240, and an output unit 250.

The communication unit 210 is a communication interface for communicating with external devices via the network 300 according to instructions from the control unit 230. The communication unit 210, for example, receives from the information processing device 100 information on a new domain that is likely to be misidentified as an existing domain held by the information processing device 100, and transmits the information to the control unit 230. The communication unit 210 also transmits, for example, check information indicating whether the new domain may cause some form of loss to its own existing domain, in accordance with instructions from the control unit 230.

The input unit 220 is an input interface that accepts input from the user of the terminal 200. The input unit 220 may be implemented by input devices such as a keyboard and mouse, for example, or by a microphone that accepts voice input. The input unit 220 transmits the input by the user to the control unit 230.

The control unit 230 is a processor that has a function of controlling each part of the terminal 200. The control unit 230 executes various programs stored in the storage unit 140 and references data stored in the storage unit 140 to execute the functions to be executed as the terminal 200.

The storage unit 240 is a storage medium that stores various programs and data required by the terminal 200 for operation. The storage unit 140 can be implemented, for example, by a hard disk drive (HDD), solid state drive (SSD), flash memory, for example, but is not limited to these. The storage unit 240 may, for example, hold a program that, when the terminal 200 receives information on a new domain transmitted from the information processing device 100, causes the information to be output to the output unit 250. The storage unit 240 may, for example, store information on the new domain transmitted from the information processing device 100.

The output unit 250 outputs the specified information according to instructions from control unit 230. The output of information by the output unit 250 may be output in the form of images or text, audio, or by transmission of information from an external device. The output unit 250 may be implemented by a monitor or speaker provided in the terminal 200, as an example, and the transmission of information is performed via the communication unit 210. The output unit 250, for example, outputs information on the new domain transmitted from the information processing device 100. This allows the user of the terminal 200 to recognize the existence of a new domain that is likely to be misidentified as an existing domain held by the user.

The above is a description of the terminal 200.

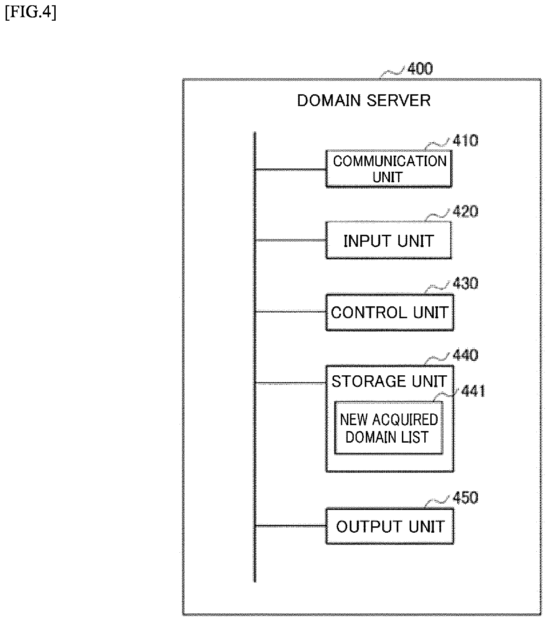

FIG. 4 shows a block diagram of the domain server 400. The domain server 400 is a computer system that stores a domain list on new domains and is equipped with a processor and memory. The domain server 400 can be implemented by, for example, but not limited to, a server device, PC, or a tablet terminal.

As shown in FIG. 4, the domain server 400 has a communication unit 410, an input unit 420, a control unit 430, a storage unit 440, and an output unit 450.

The communication unit 410 is a communication interface for communicating with external devices via the network 300 according to instructions from the control unit 430. The communication unit 410 receives, for example, request information from the information processing device 100 requesting information on a new domain and transmits the request information to the control unit 430. The communication unit 410 also transmits the new domain list to the information processing device 100 according to instructions from the control unit 430.

The input unit 420 is an input interface that accepts input from users of the domain server 400. The input unit 420 may be implemented, for example, by input devices such as a keyboard and mouse, or by a microphone that accepts voice input. The input unit 420 transmits the input by the user to the control unit 430.

The control unit 430 is a processor that has a function of controlling various parts of the domain server 400. The control unit 430 executes various programs stored in the storage unit 140 and references data stored in the storage unit 140 to execute the functions to be executed as the domain server 400.

The storage unit 440 is a storage medium that stores various programs and data required by the domain server 400 for operation. The storage unit 140 can be implemented by, for example, but not limited to, Hard Disc Drive (HDD), Solid State Drive (SSD), flash memory, and the like. The storage unit 440 may, for example, store a program that causes the domain server 400 to send a new domain list including information on new domains to the information processing device 100 when the domain server 400 receives request information requesting a new domain sent from the information processing device 100. The storage unit 440 may, for example, store the newly acquired domain list 441 transmitted from the information processing device 100. The newly acquired domain list 441 may be information input and set by a user of the domain server 400. The newly acquired domain list 441 may be automatically registered and stored by the control unit 130 each time a new domain is registered when the domain server 400 is a server that has registration function for new domains by itself.

The output unit 450 outputs the specified information according to instructions from control unit 430. The output of information by the output unit 450 may be output in the form of images or text, audio, or by transmission of information from an external device. The output unit 450 may be implemented by a monitor or speaker provided in the domain server 400, as an example, and the transmission of information is performed via the communication unit 410.

Although the details are not described here, the domain server 400 may have a function to accept a registration request for a new domain, determine whether registration is possible, and if so, register the new domain in the newly acquired domain list 441 in the storage unit 440.

The above is a description of the domain server 400.

### [Data]

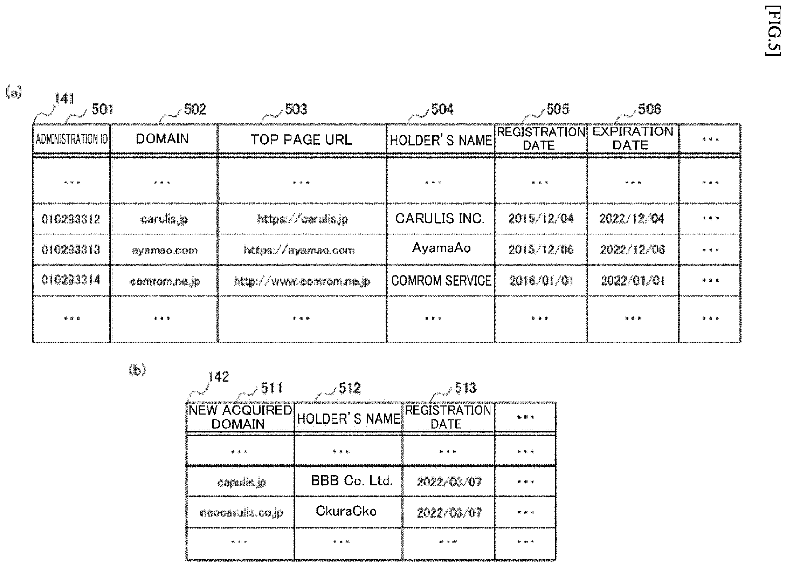

FIG. 5 is a data conceptual diagram showing an example of configuration of domain information. FIG. 5(a) shows an example of configuration of the existing domain information 141 maintained by the information processing device 100, and FIG. 5(b) shows an example of configuration of the new domain information 142 stored by the information processing device 100 or by the domain server 400.

The existing domain information 141 is a set of information on registered domains. As shown in FIG. 5(a), the existing domain information 141 is information that corresponds to an administration ID 501, a domain 502, a top URL page 503, a holder's name 504, a registration date 505, and an expiration date 506.

The administration ID 501 is identification information attached by the information processing device 100 for convenience in managing information for each domain.

The domain 502 is a string of information indicating the domain managed by the corresponding administration ID 501.

The top URL page 503 is information indicating the address (URL: Uniform Resource Locator) of the web page set for the domain managed by the corresponding administration ID 501.

The holder's name 504 is information that indicates the holder that holds the domain managed by the corresponding administration ID 501.

The registration date 505 is information indicating the date when the domain managed by the corresponding administration ID 501 was registered.

The expiration date 506 is information indicating the expiration date registered as available for the domain managed by the corresponding administration ID 501.

In the example in FIG. 5(a), for example, the domain 502 managed with the administration ID 501 of "010293312" is "carulis.jp" and the top page URL 503 of the domain 502 is "https://carulis.jp". The holder's name 504 of the domain is "Caulis Corporation", the registration date 505 is "December 4, 2015", and the expiration date is "December 4, 2022". This is only an example. The information included in the existing domain information 141 only need to include at least the domain 502 and the holder's name 504, and other information is not required. Information other than that shown in FIG. 5(a) may also be associated with the domain, as long as the information is domain-related information. For example, the existing domain information 141 may store the email address or SNS account information of the terminal 200 as contact information for the holder's name 504.

The above is a description of the existing domain information 141.

The new domain information 142 is a set of information on newly registered domains. The new domain information 142 may include information on multiple new domains or only one. As shown in FIG. 5(b), the new domain information 142 is information that corresponds to the newly acquired domain 511, the holder's name 512, and the registration date 513.

The newly acquired domain 511 is a string of information indicating the newly acquired domain.

The holder's name 512 is information indicating the holder of the domain of the corresponding newly acquired domain 511.

The registration date 513 is information indicating the date when the corresponding newly acquired domain 511 was registered.

In an example in FIG. 5(b), the holder's name 512 of the newly acquired domain 511 "caplis" is "BBB Yugen Kaisha" and its registration date 513 is "March 7, 2022". This is only an example. The new domain information 142 only needs to include at least the newly acquired domain 511, and other information is not required. The new domain information 142 may be associated with information other than that shown in FIG. 5(b), as long as the information is related to the new domain.

The new domain information 142 may be the same as the newly acquired domain list 441 stored by the domain server 400. The above is a description of the new domain information 142.

### [Operation]

The operation of the domain check system 1 and devices related to the domain check system 1 will be described below.

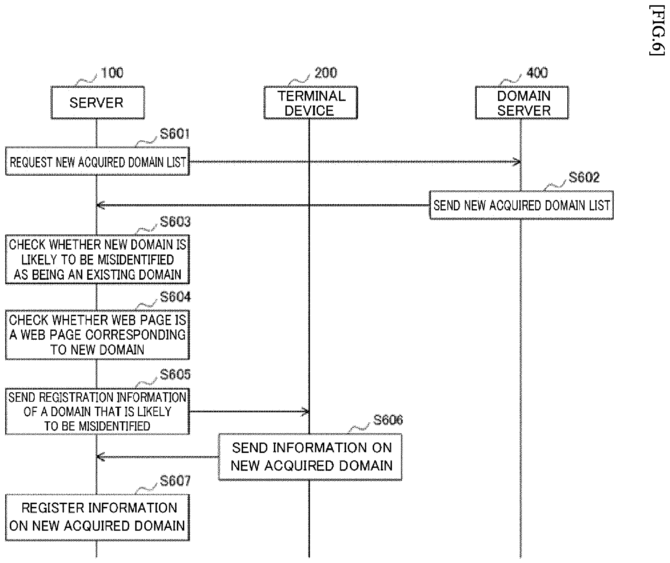

FIG. 6 is a sequence diagram showing examples of exchange between devices for the domain check system 1.

As shown in FIG. 6, the information processing device 100 sends request information to the domain server at a predetermined timing, requesting a list of newly acquired domains including information on newly acquired domains (step S601).

In response, the domain server 400 transmits (step S602) new domain information from the list of newly acquired domain list 441 that the domain server 400 stores, including information on newly registered domains that have not been transmitted to the information processing device 100 in the past.

Upon receiving the new domain information, the information processing device 100 checks whether there is a possibility that each new domain is misidentified as an existing domain (step S603). If there is a new domain that is likely to be misidentified as an existing domain, the information processing device 100 checks whether there is a web page for the new domain (step S604). If there is a possibility that the new domain is likely to be misidentified as an existing domain and a web page exists for the new domain, registration information for the new domain that is likely to be misidentified is sent to the user's terminal 200 for the existing domain that is likely to be misidentified (Step S605).

The user of the terminal 200 checks the information on the new domain, and according to the information, the user inputs information on the new domain and transmits the information to the information processing device 100 (step S606). Information on the new domain may be, for example, check information as to whether the new domain is a domain that may cause loss to the user.

The information processing device 100 registers the information on the new domain received from the terminal 200 (step S607) and the process terminates.

This allows the domain check system 1 to contact new domains that may be damaging to terminal 200.

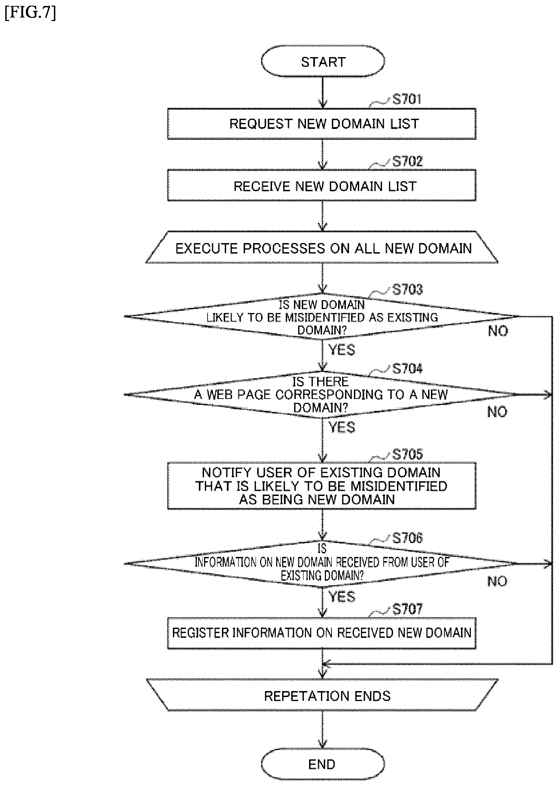

FIG. 7 is a flowchart showing an example of the operation of the information processing device 100 to achieve the exchange shown in FIG. 6.

As shown in FIG. 7, the acquisition unit 131 of the control unit 130 sends request information to the domain server 400 via the communication unit 110, requesting the newly acquired new domain list (step S701). In response, the domain server 400 sends the new domain list to information processing device 100. The communication unit 110 receives the new domain list transmitted from the domain server 400 and transmits the new domain list to the control unit 130. The control unit 130 stores the received new domain list in the storage unit 140 as new domain information 142. Then, the control unit 130 repeats processes shown in steps S703 to S707 for the new domains included in the new domain information 142 until all the new domains have been executed.

The detection unit 133 of the control unit 130 detects whether the new domain is likely to be misidentified as an existing domain (step S703). That is, the detection unit 133 detects existing domains that the new domain is likely to be misidentified. If there is no existing domain to be misidentified (NO in step S703), the process proceeds to processing of the next new domain or terminates.

If there is an existing domain that is likely to be misidentified as a new domain (YES in step S703), the check unit 132 of the control unit 130 checks whether a corresponding web page exists for the new domain (step S704). If there is no corresponding web page (NO in step S704), the process proceeds to processing of the next new domain or terminates.

If a web page corresponding to the new domain exists and there is an existing domain that is likely to be misidentified, the notification unit 134 of the control unit 130 notifies the user's terminal 200 corresponding to the existing domain via the communication unit 110 of the new domain that is likely to be misidentified (step S705).

If the communication unit 110 receives information on the new domain from the terminal 200 (YES in step S706), the communication unit 110 transmits the information to the control unit 130, otherwise (NO in step S706), the process proceeds to processing of the next new domain or the process terminates.

When the control unit 130 receives the information on the new domain from the communication unit 110, the control unit 130 registers the information in the storage unit 140 (step S707). That is, information indicating whether the information on the new domain is likely to cause damage to users of the existing domain is stored in the storage unit 140 as success/failure information, and if the information includes information that the corresponding URL is a phishing site, the information is registered as phishing site information indicating that the URL is a phishing site. The control unit 130 then proceeds to processing of the next new domain, or terminates if processing has been completed for the new domain included in the new domain information.

The processing of steps S706 and S707 need not be executed during the notification process of information on new domains to users of existing domains, and may be executed at a different time. In this way, the information processing device 100 notifies users of existing domains of information on new domains that may suffer damage.

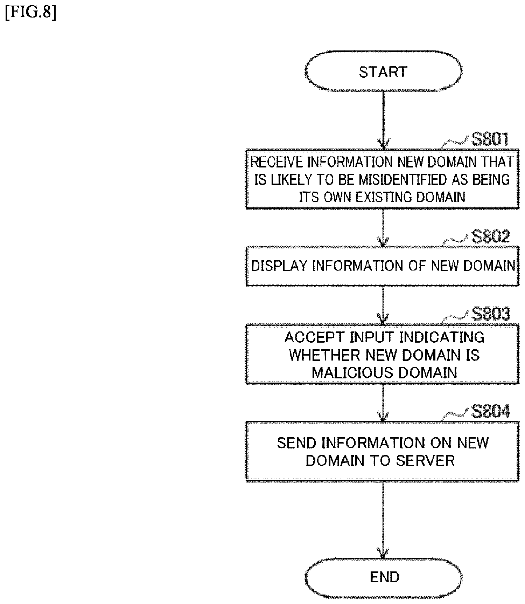

FIG. 8 is a flowchart showing an example of the operation of terminal 200 to achieve the exchange shown in FIG. 6.

As shown in FIG. 8, the communication unit 210 of the terminal 200 receives information on a new domain that is likely to be misidentified as an existing domain held by the user of the terminal 200, transmitted from the information processing device 100 (step S801). The communication unit 210 communicates the received information to the control unit 230.

The control unit 230 causes the output unit 250 to output information on the new domain received (step 802). As an example, the output unit 250 displays a string indicating the new domain.

The user of the terminal 200 checks the string of the displayed new domain and the corresponding web page to determine whether the domain is malicious to the user (a domain that may cause damage to the user). The user of the terminal 200 then inputs the user's opinion on the new domain, that is, information indicating whether the new domain is malicious to the user, into the input unit 220 (step S803). The input unit 220 communicates the input information to the control unit 230.

The control unit 230 transmits the communicated information on the new domain to the information processing device 100 via the communication unit 210 (step S804) and the process terminates.

Thereby, information is transmitted to the information processing device 100 as to whether the new domain brought by the information processing device 100 is harmful to the user of the terminal 200.

Since the domain server 400 only accepts request information from the information processing device 100 requesting information on the new domain and transmits the new domain information, a detailed description of its operation is omitted.

### [Conclusion]

According to the information processing device 100 of this embodiment, when it is determined whether a newly acquired domain is likely to be misidentified as one of the existing domains, and when it is determined that a newly acquired domain is likely to be misidentified as one of the existing domains and a web page has been established, to the user holding the existing domain that is likely to be misidentified, a user holding existing domains that is likely to be misidentified of the newly acquired domain is notified. This allows the existing domain holder (user) to recognize that a domain similar to the domain the user holds has been acquired, and to recognize the possibility that the user may suffer damage, and in some cases, to take measures such as requesting cancellation of the newly acquired domain. Therefore, the information processing system 100 can suppress the possibility that existing domain holders will suffer losses due to newly acquired domains.

### [Supplementation]

The domain check system 1 and the information processing device 100 are not limited to the above-mentioned forms. Various variations are described below.

(1) In the above form, the information processing device 100 is configured to determine whether a new domain is misidentified as an existing domain, identify whether a web page is associated with the new domain, and then notify the user of the existing domain. However, the information processing device 100 may be configured to transmit information on the new domain to users of the existing domain just after determining that the new domain is likely to be misidentified as an existing domain, without checking whether a web page is associated with the new domain. That is, the control unit 130 may not have the check unit 132, in which case the detection unit 133 detects whether any domain is misidentified as an existing domain for all new domains included in the new domain information 142.
(2) In the above configuration, the information processing device 100 determines whether the new domain is misidentified as an existing domain and determines whether to notify users of the existing domain by identifying whether a web page is associated with the new domain. However, this method is not limited to determining whether to notify users of existing domains. It may be configured to set scores for each type of determination, and notify users in existing domains when the total score exceeds a predetermined threshold value.

Examples of the score are shown below.
(a) If the new domain name is included in the 3rd party data source that collects suspicious URLs/FQDNs, the score is A.
(b) If the new domain is classified into the cluster of illegal domains in the information analyzed and clustered to determine whether the URL/FQDNs collected beforehand by the information processing device 100 are illegal or not, the score is B.
(c) If who is information of the domain is privacy guarded, the score is C.
(d) If the new domain name corresponds to any of the above forms (i) through (v) and a web page is set up, the score is D.
(e) If the new domain name is a random string, the score is E.
(f) If multiple IP addresses are associated with a new domain name and each of the IP addresses has a short usage period, the score is F.
(g) If the server certificate corresponding to the new domain name is a server certificate that has been misused in the past, or is a server certificate with the same hash value, the score is G.

If the total of the score values exceeds the predetermined threshold, the information processing device 100 may notify the user of the existing domain or output information indicating that the new domain name may be illegal. In particular, since the above cases (a), (b), (d), (e), (f), and (g) are more likely to be illegal than other cases, a higher score may be set than in other cases. In this way, the information processing device 100 may be configured to calculate a score indicating the possibility of being foully for a new domain, determine whether it is foully or not according to the score, and output the information.

(3) In the above form, it is assumed that the information processing device 100 stores the existing domain information 141 in advance, but this is not the case. It may be configured to also acquire information indicating existing domains at the stage of determining whether a newly registered domain is misidentified as an existing domain.

(4) In the above form, the information processing device 100 is configured to sequentially check new domain information with the domain server 400. However, this is not the case. This configuration may be achieved, for example, by a configuration in which the domain server 400 automatically sends the information to the information processing device 100 periodically or whenever a new domain is registered, rather than by a request from the information processing device 100 to the domain server 400.

(5) In the above example, the acquisition unit 131 acquires information on a new domain from the domain server 400, but the acquisition unit 131 may use other methods to acquire information on a new domain. Specifically, the acquisition unit 131 may acquire the domain information from certificate information (digital certificate, SSL server certificate) that can be acquired when accessing a website. Some websites issue certificate information as a guarantee of authority to access the website or to prove that communication with the website server is secure. In such cases, the website may be inaccessible or insecurely accessible. In recent years, some websites, even malicious websites such as phishing sites, use certificate information. This certificate information includes the URL of the website and guarantees access to the URL or proves that communication with the server is secure. Since the certificate information is issued at the time of accessing the website, the acquisition unit 131 may check the URL listed in the acquired certificate information to acquire information on the new domain.

(6) When each functional part of the information processing device 100 is implemented by software, the information processing device 100 is equipped with a CPU that executes instructions of a program, which is software that executes each function, a Read Only Memory (ROM) or a memory device in which the above program and various information are readably recorded by the computer (or CPU), and a Random Access Memory (RAM) in which the above program is developed. The computer (or CPU) is equipped with a Read Only Memory (ROM) or a storage device (these are referred to as "recording media") in which the above program and various information are readable by the computer (or CPU), and a Random Access Memory (RAM) in which the above program is developed. The purpose of the present invention is achieved when a computer (or CPU) reads and executes the above program from the above recording medium. That is, the information processing device 100 for the present invention functions as each of the above-mentioned components when the CPU executes the program loaded on the RAM. The above recording medium can be a "non-transient tangible medium" e.g., semiconductor memory, programmable logic circuits, for example. The above program may also be supplied to the above computer via any transmission medium capable of transmitting the program (communication network, broadcast wave, for example). The invention may also be implemented in the form of an information signal embedded in a carrier wave, in which the above program is embodied by electronic transmission.

The above programs are, for example, scripting languages such as ActionScript, JavaScript (registered trademark), Python, Ruby, and object-oriented programming languages such as C, C++, C#, Objective-C, Swift, Java (registered trademark), for example, HTML5 and other markup languages, for example, may be used for implementation. Furthermore, the term "part (section, module, unit)" in the claims may be read as "means" or "circuit". For example, a communication unit may be read as a communication means or a communication circuit.

The program of the present disclosure may be provided to the server 100 via any transmission medium (communication network, broadcast wave, for example) capable of transmitting the program.

(7) The order and timing of each of the above processes can be changed as appropriate if the same effects as those shown in the above form can be achieved. For example, the processing in step S704 and the processing in step S703 may be executed in reverse order or simultaneously. For example, the system may be configured to determine whether the new domain is likely to be misidentified as one of the existing domains when a web page corresponding to the new domain exists, and if there is an existing domain that is likely to be misidentified, the system may notify a holder of the existing domain.

### [Reference Numerals]

100 Server (information processing device)
110 Communication unit
120 Input unit
130 Control unit
131 Acquisition unit
132 Check unit
133 Detection unit
134 Notification unit
135 Registration unit
136 Inform unit
140 Storage unit
141 Existing Domain Information
142 New Domain Information
150 Output unit
200 Terminal device
210 Communication unit
220 Input unit
230 Control unit
240 Storage unit
250 Output unit
400 Domain Server
410 Communication unit
420 Input unit
430 Control unit
440 Storage unit
450 Output unit

## Claims

1. An information processing device comprising:
an acquisition unit that acquires a first domain name indicating a newly registered domain name;
a check unit that checks whether a web page corresponding to the first domain name exists;
a detection unit that detects whether the first domain name has a second domain name that is likely to be misidentified as being the same as one of existing domain names; and
a notification unit that notifies a user associated with the second domain name of information on the first domain name when the detection unit detects the second domain name and there is a web page corresponding to the first domain name that is likely to be misidentified as the second domain name.

2. The information processing device according to claim 1, wherein the detection unit detects a domain name that is the same as the first domain name when one character is added to the existing domain name as the second domain name.

3. The information processing device according to claim 1, wherein the detection unit detects a domain name that is the same as the first domain name when one character is deleted from the existing domain name as the second domain name.

4. The information processing device according to claim 1, wherein the detection unit detects, as the second domain name, a domain name that is the same as the first domain name when a predetermined string of characters is added before or after the existing domain name.

5. The information processing device according to claim 1, wherein the detection unit detects as the second domain name a domain name that is the same as the first domain name when a portion of the existing domain name is replaced by another string that is similar to the portion of the string.

6. The information processing device according to any one of claims 1 to 5, the device further comprising:
a receiving unit that receives check information from the user indicating whether the first domain name is likely to be a malicious domain name for the user; and
a registration unit that registers success/failure information indicating success or failure of detection by the detection unit based on the check information.

7. The information processing device according to any one of claims 1 to 5, the device further comprising:
a receiving unit that receives phishing information from the user indicating whether the web page corresponding to the first domain name is a phishing site; and
a registration unit that registers the first domain name as a phishing site on a black list when the phishing information indicates that the web page corresponding to the first domain name is a phishing site.

8. The information processing device according to any one of claims 1 to 5, the device further comprising:
a receiving unit that receives phishing information from the user indicating whether the web page corresponding to the first domain name is a phishing site; and
a notification unit that notifies information indicating that the first domain name is a phishing site when the phishing information indicates that the web page corresponding to the first domain name is a phishing site.

9. A domain check method, by a computer, to execute the steps of:
acquiring a first domain name indicating a newly registered domain name;
checking whether a web page corresponding to the first domain name exists;
detecting whether the first domain name has a second domain name that is likely to be misidentified as the same as one of existing domain names; and
notifying a user associated with the second domain name of information on the first domain name when the second domain name is detected in the detecting, and when there is a web page corresponding to the first domain name that is likely to be misidentified as the second domain name.

10. A domain check program that causes a computer to execute the functions of:
acquiring a first domain name indicating a newly registered domain name;
checking whether a web page corresponding to the first domain name exists;
detecting whether the first domain name has a second domain name that is likely to be misidentified as the same as one of existing domain names; and
notifying a user associated with the second domain name of information on the first domain name when the second domain name is detected in the detecting, and when there is a web page corresponding to the first domain name that is likely to be misidentified as the second domain name.
